# EUROPÄISCHE PATENTSCHRIFT

(11) **EP 2 721 318 B1**
(45) Veröffentlichungstag und Bekanntmachung des Hinweises auf die Patenterteilung: **27.04.2016**
(21) Anmeldenummer: 12734781.3
(22) Anmeldetag: 23.05.2012
(51) Int. Cl.: F16F 15/14

(54) **FLIEHKRAFTPENDEL**
CENTRIFUGAL FORCE PENDULUM
PENDULE CENTRIFUGE

(30) Priorität: 14.06.2011 DE 102011104238
(43) Veröffentlichungstag der Anmeldung: 23.04.2014
(73) Patentinhaber: Schaeffler Technologies AG & Co. KG, 91074 Herzogenaurach (DE)
(72) Erfinder: KÜHNLE, Michael, 77815 Bühl (DE); MOVLAZADA, Parviz, 76437 Rastatt (DE)
(86) Internationale Anmeldenummer: PCT/DE2012/000529
(87) Internationale Veröffentlichungsnummer: WO 2012/171515

(56) Entgegenhaltungen:
- DE-A1-102009 042 836
- DE-A1-102010 011 824
- DE-A1-102010 034 812

## Beschreibung

Die Erfindung betrifft einen Torsionsschwingungsdämpfer. Insbesondere betrifft die Erfindung einen Torsionsschwingungsdämpfer zur Übermittlung von Drehmoment zwischen einem Antriebsmotor und einem Getriebe eines Kraftfahrzeugs.

### Stand der Technik

Zum Tilgen von Torsionsschwingungen beispielsweise in einem Antriebsstrang eines Kraftfahrzeugs zwischen einem Antriebsmotor und einem Getriebe ist es bekannt, ein Fliehkraftpendel einzusetzen. Bekannte Fliehkraftpendel umfassen eine Pendelmasse, die bifilar an einer drehbaren Trägerplatte beweglich befestigt ist. Dabei wird eine Energie, die eine Beschleunigung bzw. Verzögerung einer Drehbewegung der Trägerplatte um eine Drehachse bewirkt, durch Ausschwenken der Pendelmasse in bzw. gegen die Drehrichtung zwischengespeichert bzw. wieder abgegeben. Bei einem Trapez-Fliehkraftpendel erfolgt ein gleichzeitiges Rotieren der Pendelmasse um eine eigene Achse, um zusätzlich ein Rotationsmassenträgheitsmoment zur Energiespeicherung zu nutzen, so dass das Trapez-Fliehkraftpendel allgemein einen höheren Wirkungsgrad beim Tilgen von Torsionsschwingungen als ein gewöhnliches Fliehkraftpendel erreichen kann.

Die Aufgabe der Erfindung besteht darin, einen Torsionsschwingungsdämpferanzugeben, der bei verbesserter Ausnutzung eines zur Verfügung stehenden Bauraums eine Zwischenspeicherung einer möglichst großen Energie ermöglicht, um eine Tilgung von Torsionsschwingungen weiter zu verbessern.

Die Erfindung löst diese Aufgabe mittels eines Torsionsschwingungsdämpfers mit den Merkmalen vom Anspruch 1. Unteransprüche geben bevorzugte Ausführungsformen wider.

### Offenbarung der Erfindung

Ein Torsionsschwingungsdämpfer mit Trapez-Fliehkraftpendel zur Tilgung von Torsionsschwingungen umfasst eine um eine Drehachse drehbare Trägerplatte und eine Pendelmasse, die an der Trägerplatte beweglich befestigt ist, so dass sie eine Bewegung ausführen kann, die eine Verschiebung bezüglich der Trägerplatte und eine Drehung um eine weitere Drehachse umfasst. Ferner umfasst das Fliehkraftpendel ein Federelement, das radial außerhalb der Drehachse an der Trägerplatte angeordnet ist, wobei die Pendelmasse U-förmig mit zwei Schenkeln ausgeformt ist und die Schenkel in der Drehebene der Trägerplatte auf unterschiedlichen Seiten des Federelements liegen.

Dadurch ist es möglich, eine stark hantelförmige Masseverteilung an der Pendelmasse zu erzielen, wodurch das Rotationsmassenträgheitsmoment der Pendelmasse gesteigert werden kann, ohne die Gesamtmasse der Pendelmasse zu erhöhen. Gleichzeitig entsteht eine kompakte Anordnung des weiteren Bauelements und der Pendelmasse an der Trägerplatte, sodass ein platzsparender Aufbau des Trapez-Fliehkraftpendels erzielt werden kann. Außerdem kann eine Aufhängung der Pendelmasse an der Trägerplatte bezogen auf die erste Drehachse radial weiter innen als der Schwerpunkt der Pendelmasse liegen, sodass sich die Pendelmasse besser zentrieren kann und eine geringere Tendenz zeigt, eine Reibung in der Aufhängung durch Verkippen zu vergrößern. Eine Pendelbahn der Pendelmasse weist einen geringen Radius auf, so dass ein Massenverlust beim Ausschwingen nur auf dem geringen Radius erfolgt.

In einer Ausführungsform umfasst das weitere Bauelement ein Federelement eines mit dem Trapez-Fliehkraftpendel integrierten Torsionsschwingungsdämpfers. Das Federelement kann vorteilhafter Weise relativ weit außen bezogen auf die erste Drehachse angeordnet sein, wodurch sich für eine Betätigung des Federelements ein günstiger Hebel ergeben und eine Federkapazität gesteigert sein kann.

Die zweite Drehachse kann parallel zur ersten Drehachse durch den Schwerpunkt der Pendelmasse verlaufen und der Drehsinn der Pendelmasse um die zweite Drehachse kann dem Drehsinn der Pendelmasse um die erste Drehachse entsprechen. So kann eine optimale Massenverteilung der Pendelmasse bezüglich der ersten und der zweiten Drehung realisierbar sein.

In einer ersten Ausführungsform liegt ein Verbindungsabschnitt der Schenkel radial in einem Bereich zwischen dem Federelement und der Drehachse und die Pendelmasse umfasst zwei axial miteinander verbundene Masseelemente, die einander bezüglich der Trägerplatte gegenüber liegen. Die U-förmige Pendelmasse ist somit bezogen auf die Drehachse radial nach außen geöffnet. Das weitere Bauelement kann somit radial noch weiter außen montierbar sein. Diese Anordnung kann insbesondere vorteilhaft sein, wenn eine Einleitung bzw. eine Ausleitung von Kraft bzw. Drehmoment von radial äußerer Seite erfolgt, beispielsweise mittels eines Retainers.

In einer zweiten Ausführungsform liegt das Federelement radial in einem Bereich zwischen einem Verbindungsabschnitt der Schenkel und der Drehachse und die Trägerplatte umfasst zwei axial miteinander verbundene Trägerelemente, zwischen denen die Pendelmasse angeordnet ist. Die U-förmige Pendelmässe ist somit bezogen auf die Drehachse radial nach innen geöffnet. Ein Verbindungselement der Pendelmasse mit dem Träger kann symmetrisch an den beiden Trägerelementen abgestützt sein, wodurch sich eine ausgewogenere Kraftverteilung ergeben kann, die zu einer niedrigeren Belastung des Verbindungselements führen kann. Außerdem liegt in dieser Ausführungsform der Verbindungsabschnitt der Schenkel radial außerhalb des weiteren Bauelements, wodurch eine Fliehkraftwirkung auf die Pendelmasse gesteigert sein kann.

In beiden Ausführungsformen kann die Pendelmasse ein flaches Grundelement und flache Zusatzelemente umfassen, die im Bereich der Schenkelenden flächig am Grundelement anliegen. Dadurch kann Masse weiter im Bereich der Schenkelenden konzentriert werden, sodass die hantelförmige Masseverteilung verstärkt wird. Die beiden Schenkel der Pendelmasse können dadurch eine verbesserte Tendenz zur parallelen Ausrichtung zeigen. Die Zusatzelemente können beispielsweise die Dicke der Trägerplatte aufweisen, wodurch sich in axialer Richtung ein besonders kompakter Aufbau des Torsionsschwingungsdämpfers ergeben kann.

In einer Ausführungsform weisen die Zusatzelemente jeweils, ein höheres spezifisches Gewicht als der Grundabschnitt auf. Unterschiedliche Abschnitte der Pendelmasse können dadurch auf unterschiedliche Kriterien optimierbar sein. Der Grundabschnitt kann beispielsweise auf ausreichende Festigkeit zur Befestigung an der Trägerplatte optimierbar sein, während die Zusatzelemente bezüglich ihrer Masse optimierbar sein können.

Die Pendelmassen kann mittels zweier Kulissenführungen an der Trägerplatte befestigt sein. So kann auf einfache und genaue Weise ein Bewegungsspielraum der Pendelmasse bezüglich der Trägerplatte definierbar sein.

Entlang eines Umfangs der Trägerplatte können drei Pendelmassen verteilt sein. Dadurch kann die Ausrichtung jeder Pendelmasse entlang des Umfangs maximiert sein, während gleichzeitig eine gute Masseverteilung entlang des Umfangs erzielt werden kann, um beispielsweise einer Unwucht entgegenzuwirken.

### Kurze Beschreibung der Figuren

Die Erfindung wird nun mit Bezug auf die beigefügten Figuren genauer beschrieben, in denen:
Figur 1 einen Torsionsschwingungsdämpfer mit Trapez-Fliehkraftpendel in einer ersten Ausführungsform;
Figur 2 eine Pendelmasse des Torsionsschwingungsdämpfers aus Figur 1;
Figur 3 einen Torsionsschwingungsdämpfer mit Trapez-Fliehkraftpendel in einer zweiten Ausführungsform; und
Figur 4 eine Pendelmasse des Torsionsschwingungsdämpfers aus Figur 2

### darstellt.

### Genaue Beschreibung von Ausführungsbeispielen

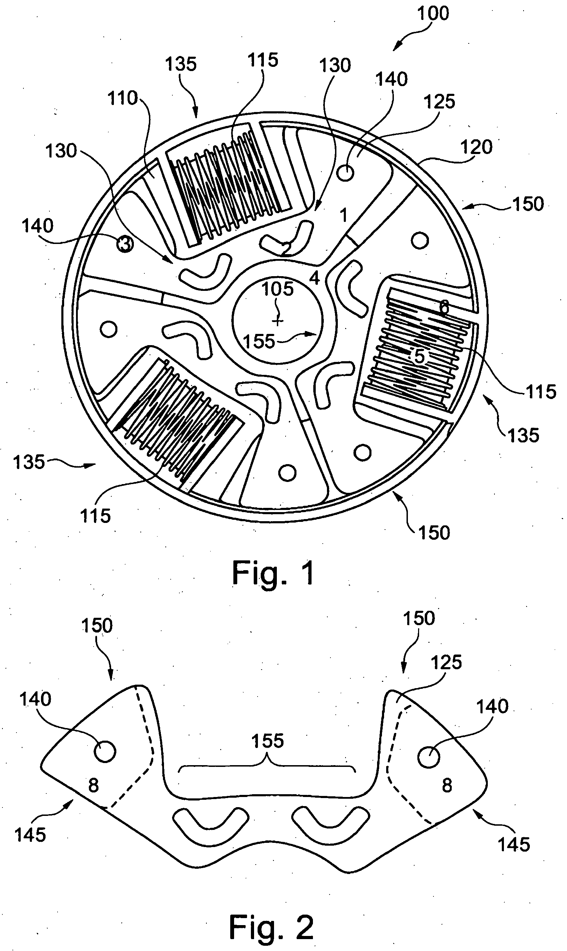

Figur 1 zeigt einen Torsionsschwingungsdämpfer 100 mit einem Trapez-Fliehkraftpendel in einer ersten Ausführungsform.

Drehbar um eine erste Drehachse 105 ist ein Trägerflansch 110 angeordnet. Der Torsionsschwingungsdämpfer 100 ist dazu eingerichtet, Drehmoment entlang der ersten Drehachse zu übertragen und dabei Torsionsschwingungen zu dämpfen bzw. zu tilgen. Der Trägerflansch 110 umfasst bezüglich der ersten Drehachse 105 gegeneinander versetzte Aussparungen, in denen jeweils eine Federanordnung 115 aufgenommen ist. Die Federn 115 sind bevorzugter Weise gerade Druckfedern, die in unterschiedlichen Ausführungsformen lineare oder nicht lineare Federkennlinien aufweisen können. Die Federanordnungen 115 können auch jeweils durch eine parallele und/oder serielle Anordnung mehrerer einzelner Federelemente gebildet sein.

Die Enden der Federanordnungen 115 liegen außerdem an nach innen weisenden Stegen einer Halterung 120 ("Retainer") an, die den Trägerflansch 110 in einem Außenbereich umschließt. Der Trägerflansch 110 und die Halterung 120 können um die erste Drehachse 105 in beide Richtungen gegeneinander verdreht werden, wobei die Federanrodungen 115 jeweils komprimiert werden. Eine solche Anordnung ist als Torsionsschwingungsdämpfer mit Druckfedern bekannt.

Im Bereich jeder Federanordnung 115 ist eine Pendelmasse 125 angeordnet. Die Pendelmasse 125 ist im Wesentlichen U-förmig bzw. hufeisenförmig und weist zwei Schenkel 150 auf, die sich von einem Verbindungsabschnitt 155 bezüglich der Drehachse 105 radial nach außen erstrecken.

Jede Pendelmasse 125 ist mittels zweier Kulissenführungen 130 am Trägerflansch 110 befestigt. Die Führungsnut der Kulissenführungen 130 kann dabei alternativ an der Pendelmasse 125 oder am Trägerflansch 110 vorgesehen sein. Die Kulissenführungen 130 erlauben es der jeweils zugeordneten Pendelmasse 125, bezüglich des Trägerflanschs 110 eine Bewegung in der Drehebene des Trägerflanschs 110 durchzuführen, die sich aus zwei Drehbewegungen zusammensetzt. Eine erste Drehbewegung erfolgt um die erste Drehachse 105. Mit der ersten Drehbewegung ist eine zweite Drehbewegung gekoppelt, die um eine zweite Drehachse 135 verläuft, die in einem Bereich zwischen den Schenkeln 150 der Pendelmasse 125 parallel zur ersten Drehachse 105 verläuft. Bevorzugterweise verläuft die zweite Drehachse 135 durch den Schwerpunkt der Pendelmasse 125.

Wird der Trägerflansch 110 beispielsweise entgegen dem Uhrzeigersinn beschleunigt, so erfährt die Pendelmasse 125 eine Bewegung, die sich aus einer Verschiebung bezüglich des Trägerflanschs 110 im Uhrzeigersinn um die erste Drehachse 105 und einer Drehung der Pendelmasse 125 um die zugeordnete zweite Drehachse 135 im Uhrzeigersinn zusammensetzt. Durch die Bewegung der Pendelmasse 125 wird dem Trägerflansch 110 kinetische Energie entzogen, die durch die entgegen gesetzte Bewegung der Pendelmasse 125 wieder in den Trägerflansch 110 eingeleitet werden kann. Auf diese Weise trägt die Bewegung der Pendelmasse 125 dazu bei, Torsionsschwingungen des Trägerflanschs 110 zu tilgen.

Die Pendelmassen 125 sind derart geformt, dass Enden ihrer auseinanderstrebenden Schenkel 150 auf unterschiedlichen Seiten jeweils einer Federanordnung 115 liegen. Dabei laufen die Schenkel 150 in einer Form aus, die bezüglich der ersten Drehachse 105 radial nach außen durch eine Innenkontur der Halterung 120 und in beiden Drehrichtungen um die erste Drehachse 105 durch die Federanordnungen 115 bzw. die an ihnen anliegenden Stege der Halterung120 und die jeweils benachbarte Pendelmasse 125 beschränkt sind. Dadurch erhalten die Endabschnitte der Schenkel 150 der Pendelmasse 125 bevorzugterweise ihre auseinander strebende Form.

In einer bevorzugten Ausführungsform ist jede der Pendelmassen 125 mit einer zugeordneten weiteren Pendelmasse 125 starr verbunden, die sich bezüglich der jeweiligen Pendelmasse 125 auf der entgegen gesetzten Seite des Trägerflanschs 110 befindet. Die einander zugeordneten Pendelmassen 125 sind beispielsweise mittels Nietverbindungen 140 miteinander verbunden.

Figur 2 zeigt eine Pendelmasse 125 des Torsionsschwingungsdämpfers 100 aus Figur 1. Insbesondere dann, wenn die Pendelmasse 125 mit einer zweiten Pendelmasse 125 mittels der Nietverbindungen 140 verbunden ist, können zwischen den Pendelmassen 125 im Bereich der Enden der Schenkel 150 Zusatzelemente 145 vorgesehen werden. Die Zusatzelemente 145 werden bevorzugter Weise durch dieselben Nietverbindungen 140 an den Pendelmassen 125 befestigt. Sowohl die sichtbaren Pendelmassen 125, als auch die Zusatzelemente 145 sind aus einem flachen Material gefertigt, vorzugsweise einem Blech. Das Zusatzelement 145 wirkt in einer Richtung vertikal zur Zeichenebene als Abstandshalter zwischen den miteinander vernieteten Pendelmassen 125. Der Abstand ist vorteilhafter Weise so gemessen, dass sich die beiden miteinander verbundenen Pendelmassen 125 bezüglich des Trägerflanschs 110 frei, aber spielarm bewegen lassen.

In einer bevorzugten Ausführungsform sind die Zusatzelemente 145 aus einem Material gefertigt, das eine höhere Dichte als die der Pendelmassen 124 besitzt. Diese Eigenschaft dient wie die Formgebung der Pendelmassen 125 dem Ziel, einen Massenschwerpunkt der Pendelmasse 125 in Figur 1 bezüglich der ersten Drehachse 105 radial möglichst weit nach außen zu verlagern, um eine Energiespeicherfähigkeit der Pendelmasse 125 bezüglich der ersten Bewegung zu vergrößern. Gleichzeitig soll eine Massenverteilung in Richtung der Enden der Schenkel 150 erfolgen, sodass eine möglichst hantelförmige Masseverteilung mit möglichst weit auseinander liegenden Teilmassenschwerpunkten der einzelnen Schenkel 150 entsteht, um die Energiespeicherfähigkeit der Pendelmasse 125 bezüglich der zweiten Teilbewegung zu maximieren.

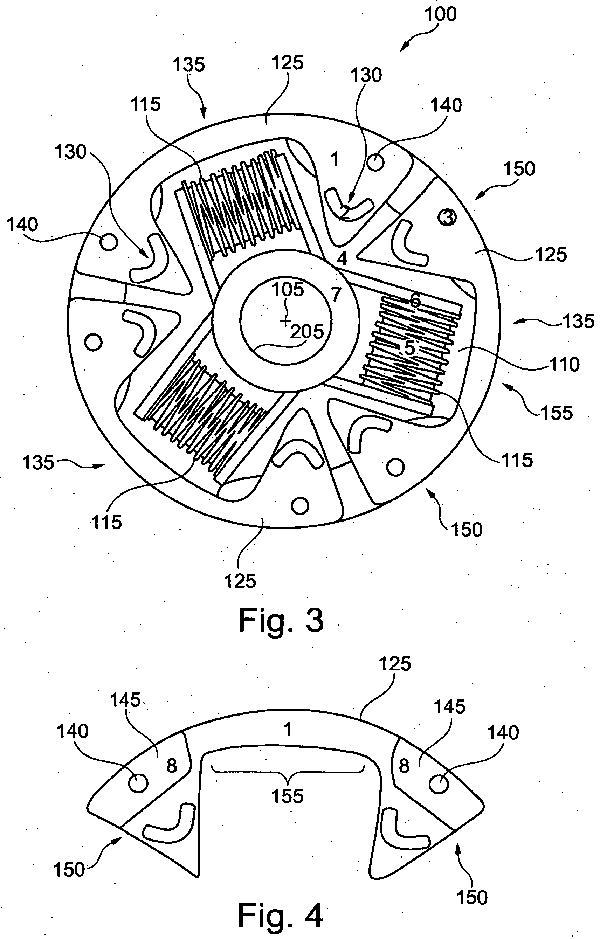

Figur 3 zeigt den Torsionsschwingungsdämpfer 100 mit Trapez-Fliehkraftpendel in einer weiteren Ausführungsform. Die verwendeten Bezugszeichen bezeichnen korrespondierende Elemente von Figur 1, falls nicht anders angegeben.

Die Trägerplatte 110 ist um die erste Drehachse 105 drehbar gelagert. In drei Aussparungen der Trägerplatte 110, die auf einen Umfang um die erste Drehachse 105 gleichmäßig verteilt sind, liegen drei Federanordnungen 115. Enden der Federanordnungen 115 stehen in Anlage mit Enden der Ausschnitte der Trägerplatte 110 sowie radialen Stegen einer Nabe 105, welche die Halterung 120 aus Figur 1 ersetzt. Durch die beschriebenen Elemente ist ein Torsionsschwlngungsdämpfer realisiert, bei dem eine Verdrehung des Trägerflanschs 110 gegenüber der Nabe 205 unter Kompression der Federanordnungen 115 möglich ist.

Die Federanordnungen 115 liegen im Vergleich zur Ausführungsform von Figur 1 radial weiter innen und die Ausschnitte im Trägerflansch 110, in denen die Federanordnungen 115 aufgenommen sind, sind auf einer radial äußeren Seite geschlossen. Die Federanordnungen 115 können variiert werden, wie oben mit Bezug auf Figur 1 beschrieben ist.

Drei U-förmige Pendelmassen 125 sind im Bereich der Federanordnungen 115 angeordnet, wobei jeweils eine der Federanordnungen 115 in einem Bereich zwischen den Schenkeln 150 einer der Pendelmassen 125 liegt. Die U-förmigen Pendelmassen 125 sind radial nach innen gerichtet, sodass Verbindungsabschnitte 155 der Pendelmassen 125 radial außerhalb der Federanordnungen 115 liegen.

In der in Figur 3 dargestellten Ausführungsform des Torsionsschwingungsdämpfers 100 werden die Pendelmassen 125 entlang der ersten Drehachse 105 nicht aufeinander geschichtet wie in der in Figur 1 dargestellten Ausführungsform. Stattdessen liegen die Pendelmassen 125 entlang der ersten Drehachse 105 zwischen dem dargestellten Trägerflansch 110 und einem weiteren, nicht dargestellten Trägerflansch 110, der mit dem sichtbaren Trägerflansch verbunden ist.

Figur 4 zeigt eine Pendelmasse 125 des Torsionsschwingungsdämpfers 100 aus Figur 2. im Bereich der Schenkel 150 der Pendelmasse 125 sind Zusatzelemente 145 angebracht, um die Masse der Pendelmasse 125 zu vergrößern und eine Masseverteilung entsprechend einer Hantel mit zwei voneinander entfernten Teilschwerpunkten zu bilden. Die Zusatzelemente 145 sind mittels einer Nietverbindung 140 flach an der Pendelmasse 125 angebracht. Ein korrespondierendes Paar von Zusatzelementen 145 in der Darstellung von Figur 4 unterhalb der Pendelmasse 125 kann vorgesehen und mit denselben Nietverbindungen 140 an der Pendelmasse 125 angebracht sein.

Durch die gewählte Masseverteilung wird erreicht, dass sowohl die durch Verschieben der Pendelmasse 125 am Trägerflansch 110 als auch die durch Verdrehen der Pendelmasse um die ihr zugeordnete zweite Drehachse 135 speicherbare Energie maximiert ist. Dadurch kann eine Tilgungswirkung bezüglich Torsionsschwingungen maximiert sein. Außerdem ist durch die besondere Ausformung der Pendelmasse 125 Raum für die Federanordnungen 115 gelassen, sodass insgesamt ein kompakter und effizienter Torsionsschwingungsdämpfer 100 entstehen kann.

### Bezugszeichenliste

- 100: Torsionsschwingungsdämpfer
- 105: erste Drehachse
- 110: Trägerflansch
- 115: Federanordnung
- 120: Halterung (Retainer)
- 125: Pendelmasse
- 130: Kulissenführung
- 135: zweite Drehachse
- 140: Nietverbindung
- 145: Zusatzelement
- 150: Schenkel
- 155: Verbindungsabschnitt

- 205: Nabe

## Patentansprüche

1. Torsionsschwingungsdämpfer (100) mit Trapez-Fliehkraftpendel zur Tilgung von Torsionsschwingungen, umfassend:
- eine um eine Drehachse (105) drehbare Trägerplatte (110);
- eine Pendelmasse (125), die an der Trägerplatte (110) beweglich befestigt ist, so dass sie eine Bewegung ausführen kann, die eine Verschiebung bezüglich der Trägerplatte (110) und eine Drehung um eine weitere Drehachse (135) umfasst;
- ein Federelement (115), das radial außerhalb der Drehachse (105) an der Trägerplatte (110) angeordnet ist;
**dadurch gekennzeichnet, dass**
- die Pendelmasse (125) U-förmig mit zwei Schenkeln (150) ausgeformt ist und die Schenkel (150) in der Drehebene der Trägerplatte (110) auf unterschiedlichen Seiten des Federelements (115) liegen.

2. Torsionsschwingungsdämpfer (100) nach Anspruch 1, wobei die weitere Drehachse (135) durch den Schwerpunkt der Pendelmasse (125) verläuft.

3. Torsionsschwingungsdämpfer (100) nach Anspruch 1 oder 2, wobei ein Verbindungsabschnitt der Schenkel (150) radial in einem Bereich zwischen dem Federelement (115) und der Drehachse (105) liegt und die Pendelmasse (125) zwei axial miteinander verbundene Masseelemente (125) umfasst, die einander bezüglich der Trägerplatte (110) gegenüber liegen.

4. Torsionsschwingungsdämpfer (100) nach Anspruch 1 oder 2, wobei das Federelement (115) radial in einem Bereich zwischen einem Verbindungsabschnitt der Schenkel (150) und der Drehachse (105) liegt und die Trägerplatte (110) zwei axial miteinander verbundene Trägerelemente (110) umfasst, zwischen denen die Pendelmasse (125) angeordnet ist.

5. Torsionsschwingungsdämpfer (100) nach einem der vorangehenden Ansprüche, wobei die Pendelmasse ein flaches Grundelement (125) und flache Zusatzelemente (145) umfasst, die im Bereich der Schenkel (150) flächig am Grundelement (125) anliegen.

6. Torsionsschwingungsdämpfer (100) nach Anspruch 5, wobei die Zusatzelemente (145) jeweils ein höheres spezifisches Gewicht als das Grundelement (125) aufweisen.

7. Torsionsschwingungsdämpfer (100) nach einem der vorangehenden Ansprüche, wobei die Pendelmasse (125) mittels zweier Kulissenführungen (130) an der Trägerplatte (110) befestigt ist.

8. Torsionsschwingungsdämpfer (100) nach einem der vorangehenden Ansprüche, wobei drei Pendelmassen (125) entlang eines Umfangs der Trägerplatte (110) verteilt sind.

## Claims

1. Torsional vibration damper (100) having a trapezium centrifugal pendulum for absorbing torsional vibrations, comprising:
- a carrier plate (110) which can be rotated about a rotational axis (105);
- a pendulum mass (125) which is fastened movably to the carrier plate (110), with the result that it can perform a movement which comprises a displacement with regard to the carrier plate (110) and a rotation about a further rotational axis (135);
- a spring element (115) which is arranged on the carrier plate (110) radially outside the rotational axis (105);
**characterized in that**
- the pendulum mass (125) is formed in a U-shaped manner with two limbs (150), and the limbs (150) lie on different sides of the spring element (115) in the rotational plane of the carrier plate (110).

2. Torsional vibration damper (100) according to Claim 1, the further rotational axis (135) running through the centroid of the pendulum mass (125).

3. Torsional vibration damper (100) according to Claim 1 or 2, a connecting section of the limbs (150) lying radially in a region between the spring element (115) and the rotational axis (105), and the pendulum mass (125) comprising two mass elements (125) which are connected axially to one another and lie opposite one another with regard to the carrier plate (110).

4. Torsional vibration damper (100) according to Claim 1 or 2, the spring element (115) lying radially in a region between a connecting section of the limbs (150) and the rotational axis (105), and the carrier plate (110) comprising two carrier elements (110) which are connected axially to one another and between which the pendulum mass (125) is arranged.

5. Torsional vibration damper (100) according to one of the preceding claims, the pendulum mass comprising a flat main element (125) and flat additional elements (145) which bear flatly against the main element (125) in the region of the limbs (150).

6. Torsional vibration damper (100) according to Claim 5, the additional elements (145) in each case having a higher specific weight than the main element (125).

7. Torsional vibration damper (100) according to one of the preceding claims, the pendulum mass (125) being fastened to the carrier plate (110) by means of two slotted guides (130).

8. Torsional vibration damper (100) according to one of the preceding claims, three pendulum masses (125) being distributed along a periphery of the carrier plate (110).

## Revendications

1. Amortisseur d'oscillations de torsion (100) avec un pendule centrifuge-trapézoïdal pour l'amortissement d'oscillations de torsion, comprenant :
- une plaque de support (110) pouvant tourner autour d'un axe de rotation (105) ;
- une masse de pendule (125), qui est fixée de manière déplaçable à la plaque de support (110) de manière à pouvoir effectuer un mouvement, qui comprend un déplacement par rapport à la plaque de support (110) et une rotation autour d'un axe de rotation supplémentaire (135) ;
- un élément de ressort (115) qui est disposé radialement à l'extérieur de l'axe de rotation (105) sur la plaque de support (110) ;
**caractérisé en ce que**
- la masse de pendule (125) est formée en forme de U avec deux branches (150) et les branches (150) sont situées dans le plan de rotation de la plaque de support (110) sur des côtés différents de l'élément de ressort (115).

2. Amortisseur d'oscillations de torsion (100) selon la revendication 1, dans lequel l'axe de rotation supplémentaire (135) s'étend à travers le centre de gravité de la masse de pendule (125).

3. Amortisseur d'oscillations de torsion (100) selon la revendication 1 ou 2, une portion de connexion des branches (150) étant située radialement dans une région entre l'élément de ressort (115) et l'axe de rotation (105) et la masse de pendule (125) comprenant deux éléments de masse (125) connectés axialement l'un à l'autre, qui sont opposés l'un à l'autre par rapport à la plaque de support (110).

4. Amortisseur d'oscillations de torsion (100) selon la revendication 1 ou 2, dans lequel l'élément de ressort (115) est situé radialement dans une région entre une portion de connexion des branches (150) et de l'axe de rotation (105) et la plaque de support (110) comprenant deux éléments de support (110) connectés l'un à l'autre, entre lesquels est disposée la masse de pendule (125).

5. Amortisseur d'oscillations de torsion (100) selon l'une quelconque des revendications précédentes, la masse de pendule comprenant un élément de base plat (125) et des éléments supplémentaires plats (145) qui s'appliquent à plat contre l'élément de base (125) dans la région des branches (150).

6. Amortisseur d'oscillations de torsion (100) selon la revendication 5, dans lequel les éléments supplémentaires (145) présentent à chaque fois un poids spécifique plus élevé que l'élément de base (125).

7. Amortisseur d'oscillations de torsion (100) selon l'une quelconque des revendications précédentes, dans lequel la masse de pendule (125) est fixée au moyen de deux guides à coulisse (130) à la plaque de support (110).

8. Amortisseur d'oscillations de torsion (100) selon l'une quelconque des revendications précédentes, dans lequel trois masses de pendule (125) sont réparties le long de la périphérie de la plaque de support (110).
